# EUROPEAN PATENT SPECIFICATION

(11) **EP 2 261 805 B1**
(45) Date of publication and mention of the grant of the patent: **31.07.2013**
(21) Application number: 09162572.3
(22) Date of filing: 12.06.2009
(51) Int. Cl.: G06F 12/12

(54) **Method for storing real time values**
Verfahren zur Speicherung von Echtzeitwerten
Méthode de stockage de valeurs temps réel

(43) Date of publication of application: 15.12.2010
(73) Proprietor: Siemens Aktiengesellschaft, 80333 München (DE)
(72) Inventor: Guerrasio, Corradino, 16167, Genua (IT)
(74) Representative: Kley, Hansjörg

(56) References cited:
- GB-A- 2 284 911
- US-A- 5 913 224
- US-B2- 7 519 776

## Description

The present invention relates to a method for storing real time values and providing them to a multiple number of client applications according to the preamble of claim 1 as well as to a system for carrying out the method.

In the world of process automation and process monitoring standard automation systems for controlling the widest conceivable variety of machines and plants are state of the art. Such technology covers in particular a broad range of products which are offered by the Siemens Corp. under its SIMATIC® product family with the field of manufacturing execution systems (MES). An extensive line of products for solving the technical tasks in question such as counting, measuring, positioning, motion control, closed-loop control and cam control enhance the performance capabilities of appropriate process controllers. A variety of configurations enable the implementation of flexible machine concepts.

SCADA stands for Supervisory Control And Data Acquisition. It generally refers to an industrial control system: a computer system monitoring and controlling a process. The process can be industrial, infrastructure or facility based as described below:

Industrial processes include those of manufacturing, production, power generation, fabrication, and refining, and may run in continuous, batch, repetitive, or discrete modes.

Infrastructure processes may be public or private, and include water treatment and distribution, wastewater collection and treatment, oil and gas pipelines, electrical power transmission and distribution, and large communication systems.

Facility processes occur both in public facilities and private ones, including buildings, airports, ships, and space stations. They monitor and control HVAC, access, and energy consumption.

A SCADA System usually consists of the following subsystems:

A Human-Machine Interface or HMI is the apparatus which presents process data to a human operator, and through this, the human operator, monitors and controls the process.

A supervisory (computer) system, gathering (acquiring) data on the process and sending commands (control) to the process.

Remote Terminal Units (RTUs) connecting to sensors in the process, converting sensor signals to digital data and sending digital data to the supervisory system.

Programmable Logic Controller (PLCs) used as field devices because they are more economical, versatile, flexible, and configurable than special-purpose RTUs.

Communication infrastructure connecting the supervisory system to the Remote Terminal Units

There is, in several industries, considerable confusion over the differences between SCADA systems and Distributed control systems (DCS). Generally speaking, a SCADA system usually refers to a system that coordinates, but does not control processes in real time. The discussion on real-time control is muddied somewhat by newer telecommunications technology, enabling reliable, low latency, high speed communications over wide areas. Most differences between SCADA and DCS are culturally determined and can usually be ignored. As communication infrastructures with higher capacity become available, the difference between SCADA and DCS will fade.

In a generic Historian product, which is intended to acquire and store in a relational database real time tag values from the level 1 automation system (i.e. SCADA, but also OPC-enabled sources like PLC, etc.), the load of the application running the acquisition and archiving subsystems will increase by remote clients or calculation subsystems which want to use the data being acquired as soon as it is available in the archive.

Moreover, remote clients that needs to read data asynchronously (e.g. reporting applications) will load the relational database, slowing down the archiving operations.

In a SCADA environment, there are only clients that display trends or elaborate data in real-time, which is not causing overload problems due to subscription to real-time feeds, which generally don't load the server much.

In MES environment, the problem is more evident, as there are more applications that rely on acquired data; complex calculation engines, OEE, SPC, reporting, data warehousing, etc.

In US 7,519,776 B2 [2] a technique for managing memory items in a cache is disclosed. An "age-lock" parameter is set to protect the newer memory items. When an incoming memory item (such as a history block header) is to be added to the cache, the amount of free space in the cache is checked. If there is insufficient free space for the incoming memory item, then space is freed up by removing memory items from the cache. No memory items protected by the age-lock parameter are removed. Of the older items, the selection for removal follows any of a number of well known cache management techniques, such as the "least recently used" algorithm. A "maximum size" parameter can be set for the cache. If the cache exceeds this maximum size, then free space is released and memory items are removed to decrease the cache size.

US 5,913,224 A [3] discloses a computer system which provides for execution of real-time code from cache memory. A cache management unit provides the real-time code to the cache memory from system memory upon a initiation of a read operation by a processor. Once in cache memory, the processor executes the real-time code from cache memory instead of system memory.

The cache management unit detects read hits to cache each time the processor requests an instruction of code that is stored in the cache memory. Lock bits associated with each line of cache lock the contents of the line preventing the line from being overwritten under normal cache operation in which the least most recently used cached data is replaced by presently accessed data.

However in a SCADA environment, there is no need of caching due to real-time subscription of data. The clients subscribe to the server the tags for which they want the values and the server will push the values to all clients as soon as they are acquired. This is generally part of the application and solved by the implementation of the server.

In MES environment, most applications rely on relational database capabilities and queuing systems to optimize the overall system load. In MES environment, there are real-time clients that will subscribe data as in the SCADA scenario, but also client applications that need archived or delayed data as a calculation engine or data warehousing. In those scenarios, a careful design of the hardware and main system load is mandatory as the peak load of the system is not fully predictable and can bring the acquisition system to data loss.

Most of the known solutions as disclosed in e.g.
EP 1 471 441 B1;
US 7,328,222 B2;
US 7,40,1084 B1;
US 7,401,187 B2 and
US 7,421,437 B2
focus on the management of data in the cache and in particular to an algorithm to remove efficiently old data/unnecessary data from the cache.

The solution according to US 7,519,776 B2 [2] is based on the "age" algorithm and not on a specific purpose/benefit of a particular cache implementation.

It is therefore a task of the present invention, to overcome the drawbacks of the known solutions for storing real time values - especially tags - in a cache memory in MES environment for their specific clients.

This task is solved according to the present invention by a method and a system for storing real time values in a cache memory with the features given in claim 1 and 6 respectively.

The advantages of the present invention are the usage of the "write through" algorithm to write real-time values in the cache and make them available to clients before actually having written them in the database. This will reduce load on the SQL database, as having the data - that is the tag values - in the cache.

Further preferred embodiments of the present invention are listed in the dependent claims.

A preferred embodiment of the present invention is hereinafter described more in detail with reference to the accompanying drawing, wherein:

Figure 1
Overview of the involved components in a MES environment for carrying out the method according the invention.

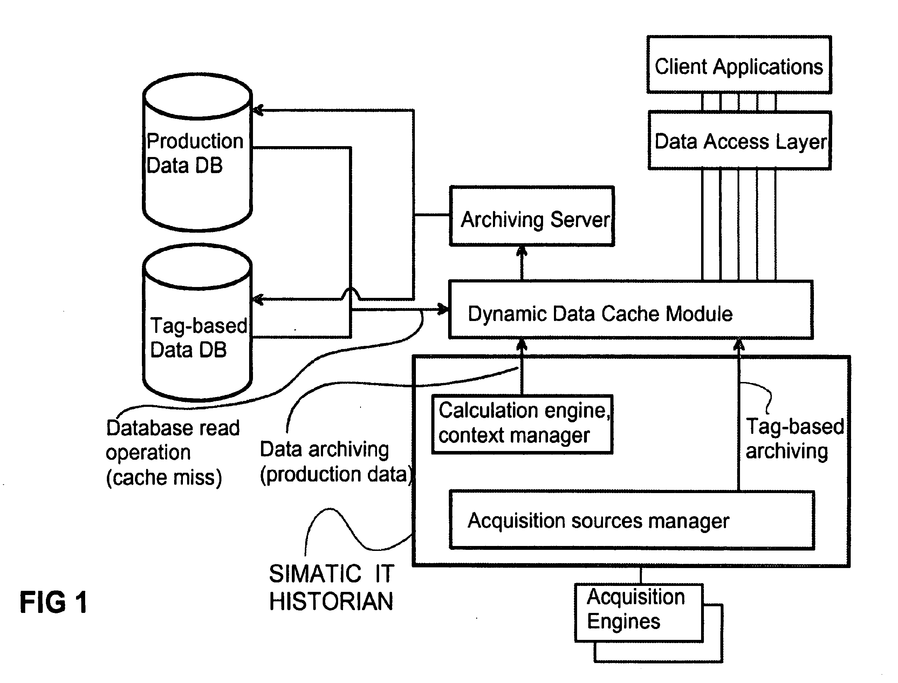

Fig. 1 shows a historian system denoted by «SIMATIC IT HISTORIAN» and outside a production database and a tag-based database. This historian system denoted by «SIMATIC IT HISTORIAN» and all MES client applications is also called «MES environment». Data requests from client applications via a data access layer are either transferred directly to the «dynamic data cache module» or via the before mentioned databases. The «dynamic data cache module» is fed from the historian system and/or the data access layer. Data is then transferred to the «archiving server» or directly to the relational database(s). The production database and a tag-based database are in the context of this patent document summarized as archiving subsystem.

The load of the system will be reduced and avoids data loss in a MES scenario with adding a «dynamic data cache module», which is a middleware software module, which takes care to keep dynamically in memory the tag values from the «MES environment» (see Fig. 1) and provide them to client applications when they will ask for them. A «dynamic data cache module» will sacrifice system memory by keeping in memory a configurable maximum amount of tag values for clients. This «dynamic data cache module» receives from the acquisition engines real-time tags and keeps them in memory for a configurable amount of time or alternatively to a maximum amount of system memory.

The «dynamic data cache module» is inserted between the archiving subsystem (e.g. relational database writing API) and the tag data flow from the acquisition server i.e. the historian system. Then client data requests must be routed always through the «dynamic data cache module».

During normal working conditions, the «dynamic data cache module» will forward tag data to the archiving subsystem, keeping always the last n values in memory, ready for client requests. Possible changes to values from the connected clients will be applied to the archiving subsystem with a so called «write-through mechanism», keeping the cache up-to-date.

Further a "read-ahead" mechanism is implemented for historical tag requests, if the tag values requests are not being acquired in real-time or out of the cache size. This improves performance and system load as it is more efficient to fetch bigger and continuous part of data out of a relational database than asking a bigger number of smaller parts of data.

Moreover, during a configuration phase, a tag may be flagged as «cache disabled» to filter out known not frequently used tags and leave space in memory for the relevant ones only. All other tags will be dynamically added or removed from cache depending on client's requests.

The usage of the «write-through mechanism» or also denoted by «write-through algorithm» to write real-time values in the cache and make them available to clients before actually having written them in the database reduces load on the SQL database, as having data in the cache, clients do not need to access it from the database. Moreover the SQL writing application can buffer data and write it to the database with bigger or bulk queries, improving efficiency and reducing again the load on the database. This latter part is generally not feasible as clients accessing directly the database want to read the data as soon as it is available, so buffering before writing is not so good. Using the cache, this problem is solved and buffering algorithm can be used. Clients will also benefit of improved response time, as data will be read from cache memory and not from database.

Cache configuration consists in which tags to keep in cache and which not. This can be very helpful when tuning the system in a real installation, as only relevant data will be kept in memory. Also the maximum number of values for each tag can be configured.

Usage of cache for 2 kind of tag data:
real-time feeds (the main purpose)
"historical data access".
Generally in historian applications, historical tag data access is not included in the time span managed by the cache and will always go directly to the database without affecting the cache.

Using a dynamic cache server makes it possible to reserve some space for historical queries optimization. By applying a «read ahead» algorithm and then keep this fetched historical tag data in the cache to foresee subsequent client requests and use in a more efficient way the underlying database.

In other words, the cache will be able to manage tag data that is not only coming from real-time acquisition (i.e. keeping the last n values of tag data in the cache) but also «chunk» of data in a different time span. For this usage, the cache will be size limited and last recently used (LRU) algorithm may be used to free space when needed.

The invention and its advantages may be summarized as follows:

1. Basically the idea is to have a tag values cache in between the real-time acquisition system and the clients with all features mentioned above, using well-known algorithms and techniques.

2. Instant data availability for cached tag values, at least for the amount covered by the cache size. This is valid also if the number of clients is very high.

3. Smaller load on underlying database subsystem, which will be more available for archiving: this will improve the product capabilities (i.e. maximum sustainable archiving rate).

4. Write through algorithm: data will be available to clients before it will be actually written to database.

5. Smaller overall system load.

On the fact having real-time cache for tag data between an Historian system (or the historian part of a SCADA), acquiring tags to be stored in a database, and the clients/interfaces accessing them a possible implementation may be an application (executable) which operates as a "cache server": all tag data to be written will go through it and then to the database; and all clients/interfaces accessing data will go through it before asking the database server.

So if from one side this cache server application will be connected to both historian server and clients, it is not really needed for them to interoperate, as the cache has the only purpose to improve response speed for clients and reduce load on the database server.

### List of used acronyms

- API: application programming interface
- DCS: Distributed control systems
- DLL: Direct link library
- HMI: Human Machine Interface
- HVAC: Heating, Ventilating and Air Conditioning
- HW: Hardware
- ISA: International Society of Automation; www.isa.org
- MES: Manufacturing execution systems
- OEM: Original Equipment Manufacturer, also used for Software
- OLE: Object Linking and Embedding
- OPC: OLE for Process Control
- ORM: Object relational mapping
- PC: Personal computer
- PLC: Programmable logic controller
- RDBMS: relational database management system
- RTU: Remote terminal Unit
- SCADA: Supervisory Control and Data Acquisition

### List of cited and discussed Literature

[1] ANSI/ISA-95.00.01-2000 Enterprise-Control System Integration Part 1: Models and Terminology
[2] US 7,519,776 B2
   Yevgeny V. Naryzhny et al.
   Assignee: Invensys Systems, Inc., Foxboro, MA (US) «Method and system for time-weighted cache management»
[3] US 5,913,224 A
   MacDonald
   «Programmable cache including a non-lockable data way and a lockable data way configured to lock real-time data»

## Claims

1. A method in a manufacturing execution system environment - in the following denoted by MES environment - for storing real time values and providing them to a multiple number of client applications, where the real time values are originating via the MES environment from acquisition engines and/or from client applications; where further
- a archiving subsystem with at least one database is connected to the MES environment,
- a dynamic data cache module, which is inserted in between the archiving subsystem and the MES environment is receiving real time values;
- rules for storing real time values in the dynamic data cache module comprise
- forwarding stored real time values to the archiving subsystem;
- keeping always a fixed number of last real time values ready for client requests to provide the real time values to the requests of specific client applications;
**characterized by**
a further rule for storing real time values in the dynamic data cache module comprising
- marking, during a configuration phase, individual real time values as «cache disabled» in order to free memory space in the dynamic data cache module.

2. The method according to claim 1,
wherein
additionally, the real time values are stored in the dynamic data cache module for a configurable amount of time.

3. The method according to claim 1 or 2,
wherein
the fixed number for keeping the last of the real time values ready is derived from a maximum amount of the available memory size.

4. The method according to one of the preceding claims 1 to 3, wherein the dynamic data cache module is controlled by a archiving server.

5. The method according to one of the preceding claims 1 to 4, wherein
real time values are tags.

6. System having means the steps of the method adapted to perform according to one of the claims 1 to 5.

## Patentansprüche

1. Verfahren in einer Manufacturing-Execution-System-Umgebung (Produktionsmanagementsystem, nachfolgend als MES-Umgebung bezeichnet) zum Speichern von Echtzeitwerten und Bereitstellen der Echtzeitwerte für mehrere Client-Anwendungen, wobei die Echtzeitwerte über die MES-Umgebung aus Erfassungsmaschinen und/ oder Client-Anwendungen kommen, wobei ferner
- ein Archivierungsteilsystem mit mindestens einer Datenbank mit der MES-Umgebung verbunden ist,
- ein Dynamic-Data-Cache-Modul (DDC-Modul), das sich zwischen dem Archivierungsteilsystem und der MES-Umgebung befindet, Echtzeitwerte empfängt,
- Regeln für das Speichern von Echtzeitwerten in dem DDC-Modul Folgendes umfassen:
- Weiterleiten von gespeicherten Echtzeitwerten zum Archivierungsteilsystem,
- stetes Bereithalten einer festen Anzahl letzter Echtzeitwerte für Client-Anforderungen zum Bereitstellen der Echtzeitwerte gemäß den Anfragen spezifischer Client-Anwendungen,
**gekennzeichnet durch**
eine weitere Regel für das Speichern von Echtzeitwerten in dem DDC-Modul, die Folgendes umfasst:
- Markieren einzelner Echtzeitwerte im Verlauf einer Konfigurationsphase als "Cache deaktiviert", um Speicherplatz in dem DDC-Modul freizumachen.

2. Verfahren nach Anspruch 1, bei dem die Echtzeitwerte zusätzlich dazu für eine konfigurierbare Dauer in dem DDC-Modul gespeichert werden.

3. Verfahren nach Anspruch 1 oder 2, bei dem die feste Anzahl für das Bereithalten der letzten Echtzeitwerte von einem Höchstumfang der verfügbaren Speichergröße abgeleitet wird.

4. Verfahren nach einem der vorhergehenden Ansprüche 1 bis 3, bei dem das DDC-Modul von einem Archivierungsserver gesteuert wird.

5. Verfahren nach einem der vorhergehenden Ansprüche 1 bis 4, bei dem es sich bei den Echtzeitwerten um Tags handelt.

6. System mit einem Mittel, das für das Ausführen der Schritte des Verfahrens nach einem der Ansprüche 1 bis 5 angepasst ist.

## Revendications

1. Un procédé dans un environnement de système d'exécution de fabrication - ci-après appelé environnement MES - destiné à conserver en mémoire des valeurs en temps réel et à les fournir à une pluralité d'applications clients, où les valeurs en temps réel proviennent de l'environnement MES à partir de moteurs d'acquisition et/ou d'applications clients, dans lequel en outre
- un sous-système d'archivage avec au moins une base de données est raccordé à l'environnement MES,
- un module de mémoire tampon de données dynamique, inséré entre le sous-système d'archivage et l'environnement MES, reçoit des valeurs en temps réel,
- des règles destinées à conserver en mémoire des valeurs en temps réel dans le module de mémoire tampon de données dynamique comprennent
- la transmission de valeurs en temps réel conservées en mémoire vers le sous-système d'archivage,
- la conservation en permanence d'un nombre fixe de dernières valeurs en temps réel à la disposition de demandes clients de façon à fournir les valeurs en temps réel aux demandes d'applications clients spécifiques,
**caractérisé par**
une règle complémentaire destinée à conserver en mémoire des valeurs en temps réel dans le module de mémoire tampon de données dynamique comprenant
- le marquage, au cours d'une phase de configuration, de valeurs en temps réel individuelles avec la mention "mémoire tampon désactivée" afin de libérer de l'espace mémoire dans le module de mémoire tampon de données dynamique.

2. Le procédé selon la revendication 1,
dans lequel
en outre, les valeurs en temps réel sont conservées en mémoire dans le module de mémoire tampon de données dynamique pendant une durée configurable.

3. Le procédé selon la revendication 1 ou 2,
dans lequel
le nombre fixe de dernières valeurs en temps réel conservées à disposition est dérivé d'une quantité maximale de la taille mémoire disponible.

4. Le procédé selon l'une quelconque des revendications précédentes 1 à 3,
dans lequel
le module de mémoire tampon de données dynamique est commandé par un serveur d'archivage.

5. Le procédé selon l'une quelconque des revendications précédentes 1 à 4,
dans lequel
des valeurs en temps réel sont des balises.

6. Un système possédant un moyen adapté de façon à exécuter les étapes du procédé selon l'une quelconque des revendications 1 à 5.
